# FASCICULE DE BREVET EUROPEEN

(11) **EP 3 360 752 B1**
(45) Date de publication et mention de la délivrance du brevet: **03.07.2019**
(21) Numéro de dépôt: 18154666.4
(22) Date de dépôt: 01.02.2018
(51) Int. Cl.: B61D 17/04, F16B 2/24, F16B 5/06

(54) **STRUCTURE DE CAISSE DE VÉHICULE FERROVIAIRE AVEC ORGANE DE FIXATION D'UNE PIÈCE D'ÉQUIPEMENT ET PROCÉDÉ DE FIXATION**
KAROSSERIESTRUKTUR EINES SCHIENENFAHRZEUGS MIT BEFESTIGUNGSORGAN EINES AUSSTATTUNGSTEILS, UND BEFESTIGUNGSVERFAHREN
A RAILWAY VEHICLE BODY STRUCTURE WITH AN ATTACHMENT MEMBER FOR A PIECE OF EQUIPMENT AND A METHOD OF FASTENING

(30) Priorité: 08.02.2017 FR 1751039
(43) Date de publication de la demande: 15.08.2018
(73) Titulaire: ALSTOM Transport Technologies, 93400 Saint-Ouen (FR)
(72) Inventeur: Roll, Stéphane, 67170 Brumath (FR)
(74) Mandataire: Lavoix

(56) Documents cités:
- EP-A1- 0 119 668
- EP-A1- 2 871 108
- DE-A1-102011 088 507
- DE-U1-202014 103 236
- GB-A- 813 143
- GB-A- 2 441 153

## Description

La présente invention concerne un ensemble comprenant une structure de caisse de véhicule ferroviaire, et au moins un organe de fixation pour fixer au moins une pièce d'équipement par rapport à la structure de caisse, l'organe de fixation étant mobile par rapport à la structure de caisse entre une position éloignée de la structure de caisse, et une position fixée dans laquelle l'organe de fixation est fixé sur la structure de caisse, la structure de caisse définissant au moins deux profilés selon une direction longitudinale, les deux profilés étant adaptés pour retenir l'organe de fixation dans la position

Un tel ensemble est connu du document EP 0 119 668 A1.

L'invention concerne également un tel ensemble et la pièce d'équipement, ainsi qu'un procédé correspondant de fixation de la pièce d'équipement par rapport à la structure de caisse.

La structure de caisse d'un véhicule ferroviaire est en métal, par exemple en alliage d'aluminium, pour conférer solidité et légèreté. La structure de caisse comprend des éléments profilés selon une direction longitudinale ou transversale du futur véhicule, et assemblées entre eux, par exemple, par soudage. La structure de caisse comprend un châssis, des faces et un pavillon.

Pour fixer des pièces d'équipement par rapport à, ou sur, la structure de caisse, cette dernière comporte au moins un rail, de fixation, et en général plusieurs. Chaque rail fait partie de la structure de caisse et présente en général une section « C » perpendiculairement à la direction longitudinale. Chaque rail comprend deux crochets protubérants par rapport au reste de la structure de caisse et s'étendant longitudinalement. Chacun des deux crochets peut être vu lui-même comme un profilé.

Pour fixer une pièce d'équipement, on a recours à des platines ou des boulons à tête carré. La tête est engagée dans un des rails et déplacée jusqu'à l'endroit voulu, puis l'écrou permet de fixer la pièce d'équipement contre le rail.

Une telle méthode donne satisfaction du point de vue de la fixation. Toutefois, les rails courent sur de grandes longueurs, et, compte tenu de leur extension perpendiculairement au reste de la structure de caisse, ils représentent une certaine masse. En outre, ces rails constituent éventuellement des obstacles pour certains éléments tels que des câbles ou des passages de câbles, des panneaux d'isolations et doivent donc parfois être modifiés ou éliminés sur une certaine longueur pour éviter d'interférer avec lesdits éléments. De plus, pour éviter les ponts thermiques, il est d'usage d'utiliser des cales de découplage qui sont intercalées entre le rail et la pièce à fixer.

Un but de l'invention est donc de fournir un ensemble tel que décrit ci-dessus, assurant une bonne fixation de la pièce d'équipement et permettant de réduire la masse du véhicule

L'invention est définie par les caractéristiques techniques de la revendication 1.

A cet effet, l'invention concerne un ensemble tel que décrit ci-dessus, dans lequel l'organe de fixation et les deux profilés sont configurés pour permettre un encliquetage de l'organe de fixation sur les deux profilés depuis la position éloignée vers la position fixée, l'organe de fixation comportant une face de fixation pour fixer la pièce d'équipement sur l'organe de fixation.

Selon des modes particuliers de réalisation, l'ensemble comprend l'une ou plusieurs des caractéristiques suivantes, prise(s) selon toutes les combinaisons techniquement possibles :
- la structure de caisse définit des surfaces situées respectivement au voisinage des deux profilés, chaque profilé définissant un creux dans la structure de caisse par rapport à la surface correspondante ;
- les surfaces au voisinage des deux profilés sont en continuité l'une de l'autre ;
- les profilés sont respectivement situés intégralement d'un même côté des surfaces selon des directions normales respectivement perpendiculaires aux surfaces ;
- chaque profilé définit, en section selon un plan perpendiculaire à la direction longitudinale, un nez sur lequel l'organe de fixation vient s'encliqueter dans la position fixée ;
- le deux nez sont situés respectivement sensiblement au niveau desdites surfaces, ou dans les creux formés par les deux profilés ;
- l'organe de fixation, dans la position fixée, comprend une section en « C » selon un plan perpendiculaire à la direction longitudinale, la section ayant deux extrémités du « C », chaque extrémité définissant un nez complémentaire, les nez complémentaires étant configurés pour s'encliqueter respectivement sur les nez des profilés dans la position fixée ;
- l'organe de fixation comprend en outre, en section selon le plan, des pattes fixées sur lesdites extrémités, les pattes formant un rebroussement par rapport à ladite section en « C » et étant configurées pour permettre un retrait de l'organe de fixation de la position fixée vers la position éloignée lorsque deux pressions en sens opposés sont appliquées respectivement sur les pattes ; et
- I la face de fixation comprend un orifice, une encoche ou un rail configurés pour fixer la pièce d'équipement sur l'organe de fixation.

L'invention concerne aussi un ensemble tel que décrit ci-dessus et comportant la pièce d'équipement.

L'invention concerne enfin un procédé pour fixer au moins une pièce d'équipement par rapport à une structure de caisse de véhicule ferroviaire, le procédé comprenant les étapes suivantes :
- fourniture de la structure de caisse, la structure de caisse définissant au moins deux profilés selon une direction longitudinale,
- fourniture d'un organe de fixation,
- déplacement de l'organe de fixation depuis une position éloignée de la structure de caisse vers une position fixée, dans laquelle l'organe de fixation est fixé sur la structure de caisse,
- encliquetage de l'organe de fixation sur les deux profilés selon une direction d'encliquetage sensiblement perpendiculaire à la direction longitudinale, les deux profilés retenant l'organe de fixation dans la position fixée, et
- fixation la pièce d'équipement sur une face de fixation de l'organe de fixation.

L'invention sera mieux comprise à la lecture de la description qui va suivre, donnée uniquement à titre d'exemple et faite en se référant aux dessins annexés, sur lesquels :
- la figure 1 est une vue partielle, en perspective, d'un ensemble selon un premier mode de réalisation de l'invention,
- la figure 2 est une vue de l'ensemble représenté sur la figure 1 en coupe selon un plan perpendiculaire à la direction longitudinale, et
- la figure 3 est une vue analogue à la figure 2, mais représentant un ensemble selon un second mode de réalisation de l'invention.

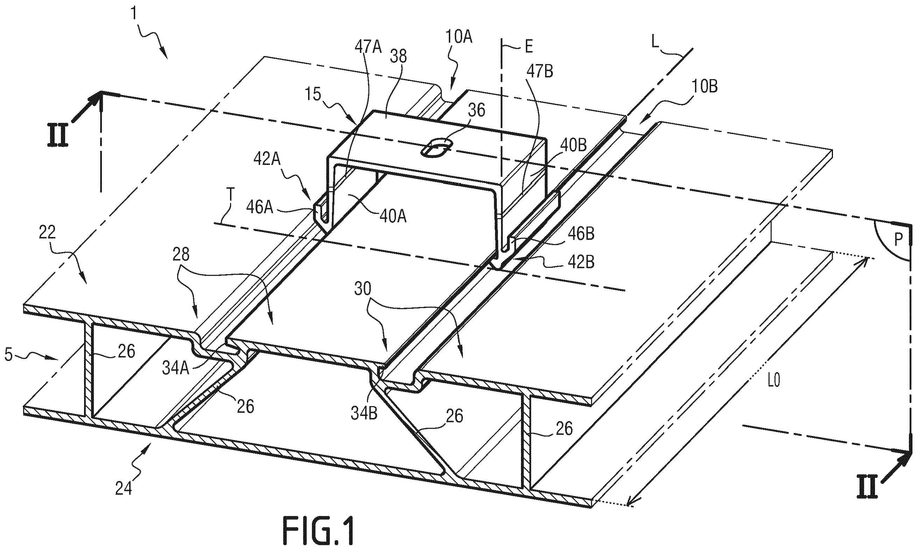

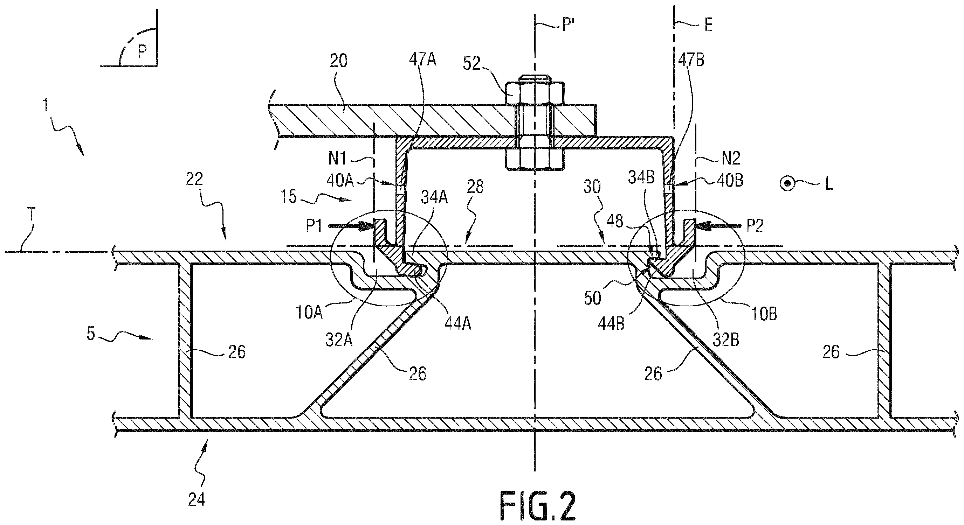

En référence aux figures 1 et 2, on décrit un ensemble 1 selon un premier mode de réalisation de l'invention. L'ensemble 1 est destiné à faire partie d'un véhicule ferroviaire (non représenté), par exemple un train à grande vitesse, un train intercité ou encore un métro.

L'ensemble 1 comprend une structure de caisse 5 définissant deux profilés 10A et 10B s'étendant selon une direction longitudinale L, un organe de fixation 15 encliqueté sur les deux profilés, et une pièce d'équipement 20 (représentée uniquement sur la figure 2) fixée sur l'organe de fixation.

La direction longitudinale L s'étend par exemple dans le sens de la longueur du futur véhicule ferroviaire.

Seule une partie de la structure de caisse 5 est représentée sur les figures 1 et 2. En particulier, la structure de caisse 5 présente par exemple une longueur L0 allant de quelques mètres à quelque dizaine de mètres. Ainsi, l'ensemble 1 comprend par exemple d'autres organes de fixation analogues à l'organe de fixation 15 et non représentés. Ces autres organes de fixation sont encliquetés dans les profilés 10A, 10B, ou dans d'autres profilés analogues (non représentés) de la structure de caisse 5.

La partie représentée de la structure de caisse 5 est par exemple située dans un plancher, un panneau latéral, ou un pavillon de la structure de caisse complète.

La structure de caisse 5 est en métal, avantageusement en alliage d'aluminium. La structure de caisse 5 est par exemple elle-même dans son entier un profilé, ou bien résulte d'un assemblage de plusieurs profilés, par exemple par soudure.

Dans l'exemple représenté, la structure de caisse 5 comprend une face supérieure 22 et une face inférieure 24 sensiblement plane 5 et sensiblement parallèles l'une à l'autre et à la direction longitudinale L.

La face supérieure 22 et la face inférieure 24 sont reliées entre elle par des nervures de rigidification 26.

La face supérieure 22 définit, du côté extérieur de la structure de caisse 5, des surfaces 28, 30 situées respectivement au voisinage des profilés 10A et 10B.

La surface 28 s'étend de part et d'autre du profilé 10A selon une direction transversale T perpendiculaire à la direction longitudinale L, et la surface 30 s'étend de part et d'autre du profilé 10B selon cette même direction.

Les surfaces 28, 30 sont avantageusement en continuité l'une de l'autre, et sont planes dans l'exemple représenté.

Les profilés 10A, 10B sont par exemple sensiblement symétriques l'un de l'autre par rapport à un plan P' (figure 2) perpendiculaire à la direction transversale T. Chaque profilé 10A, 10B définit un creux dans la structure de caisse 5 par rapport aux surfaces 28, 30 respectivement. Avantageusement, les profilés 10A, 10B sont respectivement situés intégralement d'un même côté des surfaces 28, 30 selon des directions normales N1, N2 (figure 2) respectivement perpendiculaires aux surfaces 28, 30. Dit autrement, les profilés 10A, 10B ne comportent avantageusement aucune partie susceptible de former une protubérance dirigée vers l'extérieur sur la face supérieure 22. Ainsi, en l'absence de l'organe de fixation 15, le passage est libre sur la face supérieure 22 selon la direction transversale T.

Chaque profilé 10A, 10B définit une gorge 32A, 32B, et un nez 34A, 34B sur lequel l'organe de fixation 15 est encliqueté.

Dans l'exemple représenté, les nez 34A, 34B sont dans le prolongement transversal d'un bord des gorges 32A, 32B et pointent en sens opposés l'un à l'autre.

Selon une variante non représentée, les nez 34A, 34B sont dans le prolongement transversal de l'autre bord respectivement des gorges 32A, 32B, c'est-à-dire qu'ils pointent l'un vers l'autre.

Dans l'exemple représenté, les nez 34A, 34B sont sensiblement au niveau des surfaces 28, 30 selon les directions normales N1, N2.

Selon les variantes non représentées, les nez 34A, 34B sont situés plus bas, dans les creux formés par les profilés 10A, 10B. Les nez 34A, 34B ne sont alors pas dans le prolongement d'un bord des gorges 32A, 32B, mais plus à l'intérieur de ces gorges.

L'organe de fixation 15 est mobile entre une position éloignée de la structure de caisse 5, et une position fixée (figures 1 et 2) dans laquelle l'organe de fixation est fixé sur la structure de caisse, par exemple, par serrage élastique. La position éloignée n'est pas représentée, mais se déduit facilement de celle représentée sur les figures 1 et 2 en translatant l'organe de fixation 15 par rapport à la structure de caisse 5 selon une direction d'encliquetage E perpendiculaire à la direction longitudinale L et par exemple à la direction transversale T.

L'organe de fixation 15 est par exemple lui-même un profilé, avantageusement en aluminium ou en alliage d'aluminium, dans lequel on a ménagé un orifice 36 pour fixer la pièce d'équipement 20.

En variante, l'organe de fixation 15 est en acier, en matériau composite, ou en tout matériau de la caisse d'un véhicule ferroviaire. Dans le cas d'un matériau plastique ou composite, l'organe 15, tout en assurant la fonction mécanique d'assemblage, permet aussi un découplage thermique et optimise ainsi l'encombrement de la zone d'assemblage.

L'organe de fixation 15 comprend une face de fixation 38 pour fixer la pièce d'équipement 20, et deux faces latérales 40A, 40B par exemple sensiblement perpendiculaires à la face de fixation et à la direction transversale T dans la position fixe.

L'organe de fixation 15 présente, dans la position fixée, une section en « C » selon un plan P perpendiculaire à la direction longitudinale L.

Ladite section en « C » possède deux extrémités 42A, 42B définissant deux nez complémentaires 44A, 44B configurés pour s'encliqueter respectivement sur les nez 34A, 34B dans la position fixée.

L'organe de fixation 15 est sensiblement symétrique par rapport au plan P' dans la position fixée.

L'organe de fixation 15 comprend en outre, en section selon le plan P, des pattes 46A, 46B fixées sur les extrémités 42A, 42B et formant un rebroussement par rapport à la section en « C » de l'organe de fixation.

En variante l'organe de fixation 15 comprend des épaisseurs aménagées, des ouvertures ou des zones élastiques 47A, 47B permettant d'obtenir une certaine souplesse et donc un découplage vibratoire de la fixation.

Les pattes 46A, 46B sont configurées pour permettre une mise en place ou un retrait de l'organe de fixation 15 entre la position fixée et la position éloignées lorsque deux pressions P1, P2 sont appliquées en sens opposé, respectivement sur ces pattes.

L'organe de fixation 15 présente, par exemple, une section suffisamment élastique pour permettre une déformation et une introduction dans les profilés 10A et 10B aux alentours de la position voulue. Ainsi l'organe de fixation 15 n'a pas besoin d'être enfilé pour glisser entre la position éloignée et la position fixée sur la longueur des profilés 10A, 10B.

Alternativement les nez 34A et 34B présentent un usinage local permettant l'introduction à discrétion de l'organe de fixation 15 afin de limiter ainsi son glissement.

La face de fixation 38 est par exemple plane et sensiblement parallèle à la face supérieure 22. La face de fixation 38 comporte, par exemple sensiblement en son centre, l'orifice de fixation 36.

L'orifice de fixation 36 est avantageusement de forme allongée selon la direction longitudinale L, afin de permettre d'ajuster la pièce d'équipement 20 longitudinalement par rapport à la structure de caisse 5.

Selon une variante non représentée, l'orifice de fixation 36 est allongé selon la direction transversale T.

Selon d'autres variantes non représentée, la face de fixation 38 comprend un ou plusieurs d'une encoche, d'une rainure et d'un rail pour la fixation de la pièce d'équipement 20.

Selon une autre variante non représentée, la pièce d'équipement 20 est simplement soudée sur la face de fixation 38.

Dans l'exemple représenté, les nez complémentaires 44A, 44B pointent l'un vers l'autre, à l'inverse des nez 34A, 34B.

Dans la variante où les nez 34A, 34B pointent l'un vers l'autre, les nez complémentaires 44A, 44B pointent alors en sens opposés l'un à l'autre.

Le nez complémentaire 44A est par exemple de forme arrondie et est situé, dans la position fixée, entre le nez 34A et un fond de la gorge 32A selon la direction normale N1.

Le nez complémentaire 44B a par exemple une forme de bec comportant une face 48 configurée pour buter contre le nez 34B dans la position fixée pour éviter un désencliquetage, et une face 50 en biseau configurée pour provoquer un éloignement réciproque des faces latérales 40A, 40B durant l'encliquetage, comme cela sera expliqué ci-dessous. Une fois encliqueté les tolérances entres les nez permettent de limiter les jeux et donc les déplacements relatifs.

La pièce d'équipement 20 est, par exemple, un support de dalle de câblage, un panneau de garnissage, ou un équipement léger. Dans l'exemple, la pièce d'équipement 20 est fixée sur l'organe de fixation par un boulon 52 engagé dans l'orifice de fixation 36.

Le fonctionnement de l'ensemble 1 va maintenant être décrit. On fournit tout d'abord la structure de caisse 5 qui définit au moins les deux profilés 10A, 10B, mais en pratique plusieurs couples de profilés analogues aux profilés 10A, 10B. La structure de caisse 5 est par exemple obtenue en assemblant entre eux des profilés.

On fournit aussi l'organe de fixation 15, mais en pratique une pluralité d'organes de fixation analogue à l'organe de fixation 15.

Chacun des organes de fixation est ensuite déplacé de la position éloignée de la structure de caisse 5 vers la position fixée, dans laquelle chaque organe de fixation est fixé sur la structure de caisse. L'organe de fixation 15 est encliqueté sur les deux profilés 10A, 10B selon la direction d'encliquetage E. Les deux profilés 10A, 10B retiennent alors l'organe de fixation 15 dans la position fixée.

Les éventuels autres organes de fixation sont également encliquetés sur les deux profilés 10A, 10B ou sur les autres profilés analogues.

La pièce d'équipement 20 est ensuite fixée sur l'organe de fixation 15, par exemple grâce au boulon 52.

Dans l'exemple représenté, l'encliquetage est réalisé plus précisément de la façon suivante. Le nez complémentaire 44A est inséré dans la gorge 32A définie par le profilé 10A. Le nez complémentaire 44A est plus particulièrement placé entre le nez 34A et le fond de la gorge 32A, le nez 44B restant à ce stade à l'extérieur du creux formé par le profilé 10B.

Puis, le nez 44B est abaissé selon la direction d'encliquetage E vers la structure de caisse 5 jusqu'à ce que la face 50 en biseau vienne au contact du nez 34B. Le mouvement d'abaissement se poursuivant, la face latérale 40B de l'organe de fixation 15 s'écarte transversalement de la face 40A du fait de l'élasticité de l'organe de fixation. Ceci permet au bec formé par le nez complémentaire 44B de franchir l'obstacle formé par le nez 34B. Une fois l'obstacle franchi, le nez complémentaire 44B vient s'insérer, par retour élastique, entre le nez 34B et le fond de la gorge 32B dans la position représentée sur la figure 2. La face 48 empêche alors un retrait de l'organe de fixation 15 en butant contre le nez 34B.

Dans la position encliquetée, l'organe de fixation 15 est capable de résister à une force d'arrachement exercée sur lui selon la direction d'encliquetage E. Dans l'exemple représenté, la force nécessaire pour arracher l'organe de fixation 15 est supérieure à 18000 N (newtons).

Les pattes 42A, 42B permettent de détacher l'organe de fixation 15 si nécessaire. Pour ce faire, on exerce les pressions P1, P2 transversalement sur les deux pattes représentées sur la figure 2. Ceci permet de dégager les nez complémentaires 44B, puis 44A des logements formés par les profilés 10A, 10B.

Grâce aux caractéristiques décrites ci-dessus, l'organe de fixation 15 assure une bonne fixation. La masse de l'ensemble 1 est réduite, car la matière qui définit les profilés 10A, 10B est moins importante que celle nécessaire pour former les rails de l'art antérieur.

En outre, l'ensemble 1 ne s'oppose pas au passage transversal de câbles ni à la pose d'isolation.

De plus, si l'organe de fixation 15 est en matériau isolant thermiquement, c'est-à-dire par exemple non métallique, les éventuels cales de découplage sont inutiles. L'organe de fixation 15 assure alors lui-même la fonction de découplage thermique.

De plus, si l'organe de fixation 15 est suffisamment souple une fois fixé, les éventuels plots en caoutchouc de découplage vibratoire sont inutiles. L'organe de fixation 15 assure alors lui-même la fonction de découplage vibratoire.

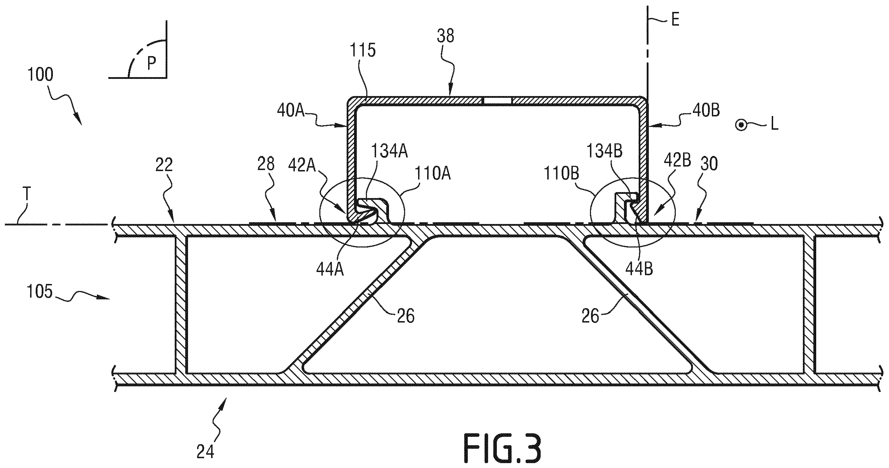

En référence à la figure 3, on décrit un ensemble 100 selon un deuxième mode de réalisation de l'invention. L'ensemble 100 est analogue à l'ensemble 1 représenté sur les figures 1 et 2. Les éléments similaires portent les mêmes références numériques et ne seront pas décrits à nouveau. Les éléments analogues portent des références numériques décalés d'une valeur 100 par rapport aux éléments de l'ensemble 1. Seules les différences seront décrites en détail ci-après.

L'ensemble 100 comporte une structure de caisse 105 qui diffère de la structure de caisse 5 par le fait qu'elle définit deux profilés 110A, 110B qui ne sont pas en creux dans la structure de caisse par rapport aux surfaces 28, 30 situées à leur voisinage.

Dans l'exemple représenté, chaque profilé 110A, 110B définit un crochet en section selon le plan P. L'extrémité de chaque crochet définit deux nez 134A, 134B analogues aux nez 34A, 34B.

L'ensemble 100 comporte aussi un organe de fixation 115 analogue à l'organe de fixation 15 et définissant deux nez complémentaires 44A, 44B venant s'encliqueter sur les nez 134A, 134B dans la position fixée.

Dans l'exemple représenté, l'ensemble 100 ne comporte pas les pattes 46A, 46B.

L'ensemble 100 fonctionne de manière analogue à l'ensemble 1. En particulier, une pièce d'équipement (non représentée) est fixée sur l'organe de fixation 115 comme la pièce d'équipement 20 est fixée sur l'organe de fixation 15 de l'ensemble 1.

L'ensemble 100 permet une fixation adéquate, puisque l'organe de fixation 115 est également très difficile à arracher de la structure de caisse 105.

Les profilés 110A, 110B permettent également un gain de masse par rapport aux rails beaucoup plus protubérants de l'art antérieur.

En outre, bien que légèrement protubérants, les profilés 110A, 110B ne constituent pas un obstacle rédhibitoire au passage de câbles selon la direction transversale T, ou bien sont plus faciles à éliminer par usinage, si on le souhaite, que les rails de l'art antérieur.

## Revendications

1. Ensemble (1 ; 100) comprenant une structure de caisse (5 ; 105) de véhicule ferroviaire, et au moins un organe de fixation (15 ; 115) pour fixer au moins une pièce d'équipement (20) par rapport à la structure de caisse (5 ; 105), l'organe de fixation (15 ; 115) étant mobile par rapport à la structure de caisse (5 ; 105) entre une position éloignée de la structure de caisse (5 ; 105), et une position fixée dans laquelle l'organe de fixation (15 ; 115) est fixé sur la structure de caisse (5 ; 105), la structure de caisse (5 ; 105) définissant au moins deux profilés (10A, 10B; 110A, 110B) selon une direction longitudinale (L), les deux profilés (10A, 10B; 110A, 110B) étant adaptés pour retenir l'organe de fixation (15 ; 115) dans la position fixée,
**caractérisé en ce que** l'organe de fixation (15 ; 115) et les deux profilés sont configurés pour permettre un encliquetage de l'organe de fixation (15 ; 115) sur les deux profilés (10A, 10B ; 110A, 110B) depuis la position éloignée vers la position fixée, l'organe de fixation (15 ; 115) comportant une face de fixation (38) pour fixer la pièce d'équipement (20) sur l'organe de fixation (15 ; 115).

2. Ensemble (1) selon la revendication 1, dans lequel la structure de caisse (5) définit des surfaces (28, 30) situées respectivement au voisinage des deux profilés (10A, 10B), chaque profilé (10A, 10B) définissant un creux dans la structure de caisse (5 ; 105) par rapport à la surface (28, 30) correspondante.

3. Ensemble (1) selon la revendication 2, dans lequel les surfaces (28, 30) au voisinage des deux profilés (10A, 10B ; 110A, 110B) sont en continuité l'une de l'autre.

4. Ensemble (1) selon la revendication 2 ou 3, dans lequel les profilés (10A, 10B ; 110A, 110B) sont respectivement situés intégralement d'un même côté des surfaces (28, 30) selon des directions normales (N1, N2) respectivement perpendiculaires aux surfaces (28, 30).

5. Ensemble (1) selon l'une quelconque des revendications 2 à 4, dans lequel chaque profilé (10A, 10B) définit, en section selon un plan (P) perpendiculaire à la direction longitudinale (L), un nez (34A, 34B) sur lequel l'organe de fixation (15) vient s'encliqueter dans la position fixée.

6. Ensemble (1) selon la revendication 5, dans lequel le deux nez (34A, 34B) sont situés respectivement sensiblement au niveau desdites surfaces (28, 30), ou dans les creux formés par les deux profilés (10A, 10B ; 110A, 110B).

7. Ensemble (1) selon l'une quelconque des revendications 1 à 6, dans lequel l'organe de fixation (15), dans la position fixée, comprend une section en « C » selon un plan (P) perpendiculaire à la direction longitudinale (L), la section ayant deux extrémités (42A, 42B) du « C », chaque extrémité (42A, 42B) définissant un nez complémentaire (44A, 44B), les nez complémentaires (44A, 44B) étant configurés pour s'encliqueter respectivement sur les nez (34A, 34B) des profilés (10A, 10B; 110A, 110B) dans la position fixée.

8. Ensemble (1) selon la revendication 7, dans lequel l'organe de fixation (15) comprend en outre, en section selon le plan (P), des pattes (46A, 46B) fixées sur lesdites extrémités (42A, 42B), les pattes (46A, 46B) formant un rebroussement par rapport à ladite section en « C » et étant configurées pour permettre un retrait de l'organe de fixation (15 ; 115) de la position fixée vers la position éloignée lorsque deux pressions (P1, P2) en sens opposés sont appliquées respectivement sur les pattes (46A, 46B).

9. Ensemble (1 ; 100) selon l'une quelconque des revendications 1 à 8, dans lequel la face de fixation (38) comprend un orifice, une encoche ou un rail configurés pour fixer la pièce d'équipement 20) sur l'organe de fixation (15 ; 115).

10. Procédé pour fixer au moins une pièce d'équipement (20) par rapport à une structure de caisse (5 ; 105) de véhicule ferroviaire, le procédé comprenant les étapes suivantes :
- fourniture de la structure de caisse (5 ; 105), la structure de caisse (5 ; 105) définissant au moins deux profilés (10A, 10B; 110A, 110B) selon une direction longitudinale (L),
- fourniture d'un organe de fixation (15 ; 115),
- déplacement de l'organe de fixation (15 ; 115) depuis une position éloignée de la structure de caisse (5 ; 105) vers une position fixée, dans laquelle l'organe de fixation (15 ; 115) est fixé sur la structure de caisse (5 ; 105),
- encliquetage de l'organe de fixation (15 ; 115) sur les deux profilés (10A, 10B ; 110A, 110B) selon une direction d'encliquetage (E) sensiblement perpendiculaire à la direction longitudinale (L), les deux profilés (10A, 10B ; 110A, 110B) retenant l'organe de fixation (15 ; 115) dans la position fixée, et
- fixation la pièce d'équipement (20) sur une face de fixation (38) de l'organe de fixation (15 ; 115).

## Patentansprüche

1. Einrichtung (1; 100) mit einer Schienenfahrzeug-Karosseriestruktur (5; 105) und wenigstens einem Befestigungsorgan (15; 115) zum Befestigen wenigstens eines Ausrüstungsteils (20) bezüglich der Karosseriestruktur (5; 105), wobei das Befestigungsorgan (15; 115) bezüglich der Karosseriestruktur (5; 105) bewegbar ist zwischen einer Position abgerückt von der Karosseriestruktur (5; 105) und einer Befestigt-Position, in welcher das Befestigungsorgan (15; 115) an der Karosseriestruktur (5; 105) befestigt ist, wobei die Karosseriestruktur (5; 105) wenigstens zwei Profile (10A, 10B; 110A, 110B) entlang einer Längsrichtung(L) definiert, wobei die beiden Profile (10A, 10B; 110A, 110B) angepasst sind zum Rückhalten des Befestigungsorgans (15; 115) in der Befestigt-Position,
**dadurch gekennzeichnet, dass** das Befestigungsorgan (15; 115) und die beiden Profile konfiguriert sind zum Ermöglichen eines Einrastens des Befestigungsorgans (15; 115) an den beiden Profilen (10A, 10B; 110A, 110B) von der Abgerückt-Position aus zu der Befestigt-Position hin, wobei das Befestigungsorgan (15; 115) eine Befestigungsseite (38) zum Befestigen des Ausrüstungsteils (20) an dem Befestigungsorgan (15; 115) aufweist.

2. Einrichtung (1) gemäß Anspruch 1, wobei die Karosseriestruktur (5) Flächen (28, 30) definiert, die respektive benachbart zu den beiden Profilen (10A, 10B) angeordnet sind, wobei jedes Profil (10A, 10B) einen Hohlraum in der Karosseriestruktur (5; 105) bezüglich der korrespondierenden Fläche (28, 30) definiert.

3. Einrichtung (1) gemäß Anspruch 2, wobei die Flächen (28, 30) benachbart der beiden Profile (10A, 10B; 110A, 110B) einander fortsetzen.

4. Einrichtung (1) gemäß Anspruch 2 oder 3, wobei die Profile (10A, 10B; 110A, 110B) entlang Normalen-Richtungen (N1, N2), die respektive senkrecht zu den Flächen (28, 30) sind, respektive ganz auf einer gleichen Seite der Flächen (28, 30) angeordnet sind.

5. Einrichtung (1) gemäß irgendeinem der Ansprüche 2 bis 4, wobei jedes Profil (10A, 10B) im Schnitt entlang einer Ebene (P) senkrecht zu der Längsrichtung (L) eine Nase (34A, 34B) definiert, an welcher das Befestigungsorgan (15) in der Befestigt-Position zum Einrasten kommt.

6. Einrichtung (1) gemäß Anspruch 5, wobei die beiden Nasen (34A, 34B) respektive im Wesentlichen auf Niveau der besagten Flächen (28, 30) oder in den Hohlräumen angeordnet sind, die von den beiden Profilen (10A, 10B; 110A, 110B) gebildet werden.

7. Einrichtung (1) gemäß irgendeinem der Ansprüche 1 bis 6, wobei das Befestigungsorgan (15) in der Befestigt-Position entlang einer Ebene (P) senkrecht zu der Längsrichtung (L) einen "C"-Querschnitt hat, wobei der Querschnitt zwei Enden (42A, 42B) des "C" hat, wobei jedes Ende (42A, 42B) eine komplementäre Nase (44A, 44B) definiert, wobei die komplementären Nasen (44A, 44B) konfiguriert sind zum respektive Einrasten an den Nasen (34A, 34B) der Profile (10A, 10B; 110A, 110B) in der Befestigt-Position.

8. Einrichtung (1) gemäß Anspruch 7, wobei das Befestigungsorgan (15) ferner aufweist, im Schnitt entlang der Ebene (P), Klauen (46A, 46B), die an den Enden (42A, 42B) fixiert sind, wobei die Klauen (46A, 46B) eine Umkehrstelle bezüglich des "C"-Querschnitts bilden und konfiguriert sind zum Erlauben eines Ausrückens des Befestigungsorgans (15; 115) von der Befestigt-Position zu der Abgerückt-Position, wenn zwei Drückbetätigungen (P1, P2) in entgegengesetzte Richtungen respektive auf die Klauen (46A, 46B) ausgeübt werden.

9. Einrichtung (1; 100) gemäß irgendeinem der Ansprüche 1 bis 8, wobei die Befestigungsseite (38) aufweist eine Öffnung, eine Nut oder eine Schiene, die konfiguriert sind zum Befestigen des Ausrüstungsteils (20) an dem Befestigungsorgan (15; 115).

10. Verfahren zum Befestigen wenigstens eines Ausrüstungsteils (20) bezüglich einer Schienenfahrzeug-Karosseriestruktur (5; 105), wobei das Verfahren die folgenden Schritte aufweist:
- Bereitstellen der Karosseriestruktur (5; 105), wobei die Karosseriestruktur (5; 105) wenigstens zwei Profile (10A, 10B; 110A, 110B) entlang einer Längsrichtung (L) definiert,
- Bereitstellen eines Befestigungsorgans (15; 115),
- Verlagern des Befestigungsorgans (15; 115) von einer Position abgerückt von der Karosseriestruktur (5; 105) zu einer Befestigt-Position hin, in welcher das Befestigungsorgan (15; 115) an der Karosseriestruktur (5; 105) befestigt ist,
- Einrasten des Befestigungsorgans (15; 115) an den beiden Profilen (10A, 10B; 110A, 110B) entlang einer Einrastrichtung (E) im Wesentlichen senkrecht zu der Längsrichtung (L), wobei die beiden Profile (10A, 10B; 110A, 110B) das Befestigungsorgan (15; 115) in der Befestigungsposition rückhalten, und
- Befestigen des Ausrüstungsteils (20) an einer Befestigungsseite (38) des Befestigungsorgans (15; 115).

## Claims

1. Assembly (1; 100) comprising a railway vehicle body structure (5; 105) and at least one fixing member (15; 115) for fixing at least one piece of equipment (20) relative to the body structure (5; 105), the fixing member (15; 115) being movable relative to the body structure (5; 105) between a position remote from the body structure (5; 105) and a fixed position in which the fixing member (15; 115) is fixed to the body structure (5; 105), the body structure (5; 105) defining at least two profiles (10A, 10B; 110A, 110B) in a longitudinal direction (L), the two profiles (10A, 10B; 110A, 110B) being adapted to hold the fixing member (15; 115) in the fixed position,
**characterised in that** the fixing member (15; 115) and the two profiles are configured to allow the fixing member (15; 115) to be snap fitted onto the two profiles (10A, 10B; 110A, 110B) from the remote position into the fixed position, the fixing member (15; 115) having a fixing face (38) for fixing the piece of equipment (20) to the fixing member (15; 115).

2. Assembly (1) according to claim 1, wherein the body structure (5) defines surfaces (28, 30) situated in the vicinity of the two profiles (10A, 10B), each profile (10A, 10B) defining a recess in the body structure (5; 105) relative to the corresponding surface (28, 30).

3. Assembly (1) according to claim 2, wherein the surfaces (28, 30) in the vicinity of the two profiles (10A, 10B; 110A, 110B) are a continuation of one another.

4. Assembly (1) according to claim 2 or 3, wherein the profiles (10A, 10B; 110A, 110B) are situated entirely on the same side of the surfaces (28, 30) in directions normal (N1, N2) or perpendicular to the surfaces (28, 30).

5. Assembly (1) according to any one of claims 2 to 4, wherein each profile (10A, 10B) defines, in cross-section according to a plane (P) perpendicular to the longitudinal direction (L), a nose (34A, 34B) onto which the fixing member (15) will be snap fitted in the fixed position.

6. Assembly (1) according to claim 5, wherein the two noses (34A, 34B) are situated substantially at the level of said surfaces (28, 30) or in the recesses formed by the two profiles (10A, 10B; 110A, 110B).

7. Assembly (1) according to any one of claims 1 to 6, wherein the fixing member (15), in the fixed position, comprises a "C"-shaped cross-section according to a plane (P) perpendicular to the longitudinal direction (L), the cross-section having two ends (42A, 42B) of the "C", each end (42A, 42B) defining a complementary nose (44A, 44B), the complementary noses (44A, 44B) being configured to snap fit onto the noses (34A, 34B) of the profiles (10A, 10B; 110A, 110B) in the fixed position.

8. Assembly (1) according to claim 7, wherein the fixing member (15) further comprises, in cross-section according to the plane (P), lugs (46A, 46B) fixed to said ends (42A, 42B), the lugs (46A, 46B) forming a turned-back region relative to said "C"-shaped cross-section and being configured to allow the fixing member (15; 115) to be withdrawn from the fixed position into the remote position when two pressures (P1, P2) in opposite directions are applied to the lugs (46A, 46B).

9. Assembly (1; 100) according to any one of claims 1 to 8, wherein the fixing face (38) comprises an orifice, a notch or a rail configured for fixing the piece of equipment (20) to the fixing member (15; 115).

10. Method for fixing at least one piece of equipment (20) relative to a railway vehicle body structure (5; 105), the method comprising the following steps:
- providing the body structure (5; 105), the body structure (5; 105) defining at least two profiles (10A, 10B; 110A, 110B) in a longitudinal direction (L),
- providing a fixing member (15; 115),
- moving the fixing member (15; 115) from a position remote from the body structure (5; 105) into a fixed position, in which the fixing member (15; 115) is fixed to the body structure (5; 105),
- snap fitting the fixing member (15; 115) onto the two profiles (10A, 10B; 110A, 110B) in a snap-fit direction (E) substantially perpendicular to the longitudinal direction (L), the two profiles (10A, 10B; 110A, 110B) holding the fixing member (15; 115) in the fixed position, and
- fixing the piece of equipment (20) to a fixing face (38) of the fixing member (15; 115).
